(19) Europäisches Patentamt
European Patent Office
Office européen des brevets

(11) **EP 1 021 003 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(51) Int Cl.:
*H04B 7/26* (2006.01)    *H04B 1/707* (2006.01)

(21) Anmeldenummer: **00200074.3**

(22) Anmeldetag: **11.01.2000**

(54) **Drahtloses Netzwerk**

Wireless Network

Réseau sans fil

(84) Benannte Vertragsstaaten:
**DE FR GB**

(30) Priorität: **18.01.1999 DE 19901622**

(43) Veröffentlichungstag der Anmeldung:
**19.07.2000 Patentblatt 2000/29**

(73) Patentinhaber:
- **Philips Intellectual Property & Standards GmbH**
  **20099 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder:
- **Herrmann, Christoph,**
  **Philips Corp. Int. Prop. GmbH**
  **52064 Aachen (DE)**
- **Du, Yonggang,**
  **Philips Corp. Int. Prop. GmbH**
  **52064 Aachen (DE)**

(74) Vertreter: **Volmer, Georg**
**Philips Intellectual Property & Standards GmbH**
**Postfach 50 04 42**
**52088 Aachen (DE)**

(56) Entgegenhaltungen:
**WO-A-98/18280**

- **M. MOULY, M.-B. PAUTET: "The GSM System for Mobile Communications" 1992 , CELL&SYS. CORRESPONDENCE , PALAISEAU XP002256167 * Seite 206, Absatz 1 - Seite 215, Absatz 1 * * Seite 245, Absatz 1 - Seite 245, letzter Absatz * * Seite 256, Absatz 2 - Seite 258, letzter Absatz * * Seite 368, letzter Absatz - Seite 376, letzter Absatz ***
- **A. BÖTTCHER: "Vielfachzugriffsmethoden in zentralisierten Datenfunknetzen für zeitvariante, gestörte Kanäle" 1992 , VDI-VERLAG GMBH , DÜSSELDORF XP002256168 * Seite 2, Absatz 2 - Seite 3, letzter Absatz * * Seite 10, Absatz 2 * * Seite 14, Absatz 3 - Seite 20, letzter Absatz * * Abbildungen 1.1,2.4,2.5 ***

EP 1 021 003 B1

## Beschreibung

Die Erfindung bezieht sich auf ein drahtloses Netzwerk mit mindestens einer Basisstation und mehreren zugeordneten Terminals zum Austausch von Nutz- und Steuerdaten.

In dem Dokument "ETSI SMG2, Meeting no 24, Cork Ireland, 1-5 December 1997, Tdoc SMG2 359/97, Concept Group Alpha - Wideband Direct-Sequence CDMA (WCDMA), EVALUATION DOCUMENT (3.0), Part 1: System Description, Performance Evaluation" wird ein nach dem CDMA-Verfahren (CDMA = Code Division Multiplex Access) arbeitendes Funknetzwerk vorgeschlagen. Das Funknetzwerk besteht aus nichreren Funkzellen mit jeweils einer Basisstation und darin befindlichen Terminals oder Mobilstationen. Nach der Registrierung und Synchronisierung eines Terminals, sendet ein Terminal beispielsweise bei Anforderung eines Nutzkanals ein Meldungspaket (Random-Access burst) über einen Zufallskanal (RACH = Random Access Channel). Das Meldungspaket besteht aus einem Präambelteil (Preamble part) und einem Datenteil (Data part). Der Präambelteil besteht aus 16 orthogonalen Symbolen (Präambelsequenz/ Preamble sequence), die durch einen Gold-Code (Präambel-Code/ Preamble code) gespreizt ist. Der Gold-Code enthält 256 Chipintervalle. Der Datenteil enthält ein Feld mit einer Identifizierung für das Terminal, ein Feld zur Kennzeichnung des angeforderten Dienstes (Übertragung kurzer Pakete/ short packet transmission, Verbindungswunsch für einen dedizierten Nutzkanal/ dedicated-channel set-up usw.), ein optionales Feld für Datenpakete (Optional user packet) und ein CRC-Feld zur Fehlerdetektierung. Ein von einer Basisstation empfangenes Meldungspaket wird über ein Matched-Filter, einen Präambel-Korrelator (Preamble correlator), einen Impulsdetektor (Peak detector) zu einem den Zeitverlauf des Datenteils abschätzenden Schaltungsteil geliefert, welches eine RAKE-Schaltung zur Auswertung des Datenteils steuert. Es wird hier also eine auf einer Korrelation basierende Impulsdetektion mit anschließender Nachrichtendecodierung angewendet. Für die einer Basisstation zugeordneten Terminals stehen 80 Zufallskanäle zur Verfügung. Diese Kanäle werden durch 16 unterschiedliche Präambel-Codes und 5 unterschiedliche Sendezeitpunkte bestimmt. Senden zwei oder mehrere Terminals über denselben Zufallskanal, d.h. es wird derselbe Präambel-Code und Sendezeitpunkt gewählt, entsteht eine Kollision und die von den Terminals ausgesendeten Informationen können von der Basisstation nicht korrekt ausgewertet werden. Solche Kollisionen sind insbesondere bei hohen Verkehrsbelastungen wahrscheinlich.

WO98/18289 beschreibt ein Mobilfunksystem mit einer Basisstation und einer Vielzahl von Mobilstationen, Zur Kanalkapazitätsanforderung sendet ein Mobiltelefon einen Access Request Data Frame zu Beginn eines Random Access Frames. Davor ist die Mobilstation bereits mit der Basisstation synchronisiert. Die Mobilstation bestimmt den Startzeitpunkt für jeden "Random Access Frame" aus einer von der Basisstation ausgesendeten Broadcast/Pilot- Kanalinformation. Nachdem der "Access Request Frame" empfangen und mit einem Matched-Filter demoduliert ist, erkennt die Basisstation den Request und steuert die nachfolgenden Informationsübertragungen der Mobilstation. Wenn Kanalkapazitäten verfiigbar sind, übermittelt die Basisstation eine Bestätigungsmeldung an die Mobilstation. Wenn keine Kanalkapazitäten verfügbar sind, übermittelt die Basisstation eine "busy" Meldung.

In dem Buch von M.Mouly, M.-B.Pautet: The GSM System for Mobile Communications", 1992 Cell&Sys. Correspondences, Palaiseau, XP 002256167 ist der Aufbau eines GSM-Systems beschrieben. Eine Mobilstation zeigt eine Kanalkapazitätsanforderung auf dem Random Access Channel an. Um Kollisionen bei gleichzeitigen Kanalkapazitätsanforderungen zu vermeiden, werden Wiederholungen des Random Access Signals von zwei Mobilstationen gestreckt oder die Anzahl der Wiederholungen wird reduziert. Diese Parameter, die die Anzahl der Wiederholungen und die Intervalle zwischen den Wiederholungen angeben, werden mittels Broadcast-Verfahren auf dem BCCH-Channel übermittelt. Somit sind die Parameter für alle Mobilstationen gleich.

Der Erfindung liegt die Aufgabe zugrunde, ein drahtloses Netzwerk zu schaffen, bei dem ein Terminal auf eine andere Art Signalisierungsinformationen mit der zugeordneten Basisstation austauscht.

Die Aufgabe wird gelöst durch ein drahtloses Netzwerk mit mindestens einer Basisstation und mehreren zugeordneten Terminals zum Austausch von Nutz- und Steuerdaten, bei dem die Terminals zur Kanalkapazitätsanforderung eine Signalisierungssequenz aussenden, und die Basisstation eine Korrelationsvorrichtung zur Korrelation eines von einem der zugeordneten Terminals gesendeten Signals aufweist, welches die Signalisierungssequenz enthält, wobei die Korrelationsvorrichtung zur Detektion eines aus der Signalisierungssequenz entstandenen Impulses verwendet wird und die Basisstation eine Kanalzugtiffssteuerung enthält, die nach Detektion der Signalisierungssequenz zur Abweisung oder Bestätigung der Kanalkapazitätsanforderung des Terminals für einen von mehreren Terminals gemeinsam genutzten Kanal vorgesehen ist, wobei die Basisstation Mittel enthält, um den zugeordneten Terminals verschiedene Startzeitpunkte innerhalb eines Referenzrahmens zur Aussendung wenigstens einer Signalisierungssequenz für eine Kanalkapazitätsanforderung zuzuweisen.

Unter dem erfindungsgemäßen drahtlosen Netzwerk ist ein Netzwerk mit mehreren Funkzellen zu verstehen, in denen jeweils eine Basisstation und mehrere Terminals Steuer- und Nutzdaten drahtlos übertragen. Eine drahtlose Übertragung dient zur Übertragung von Informationen z.B. über Funk-, Ultraschall- oder Infrarotwege.

Nach der Registrierung und Synchronisierung muss ein Terminal zur Übertragung von Nutzdaten einen bestimmten Nutzkanal bei der zugeordneten Basisstation anfordern. Ein solcher Nutzkanal kann beispielsweise ein dedizierter Nutzkanal (z.B. zur Sprachübertragung) entweder zwischen Basisstation und Terminal oder zwischen zwei Terminals sein. Die Zuweisung der Kanäle nimmt die Basisstation vor. Erfindungsgemäß wird von einem Terminal über einen von der Basisstation vorgegebenen Signalisierungskanal eine Anforderung z.B. nach einem dedizierten Nutzkanal übertragen. Von der Basisstation muss wenigstens der Startzeitpunkt einer ggf. vorher bekannten Signalisierungssequenz den Terminals mitgeteilt werden. Es ist auch möglich, dass außer dem Startzeitpunkt den Terminals auch eine von mehreren Signalisierungssequenzen zugewiesen wird. Eine solche Signalisierungssequenz ist eine Gold- oder Kasami-Sequenz mit guten Auto- und Kreuzkorrelationseigenschaften. In der Basisstation ist eine Vorrichtung (z.B. ein Matched-Filter) enthalten, in der eine Korrelation der empfangenen Signalisierungssequenzen durchgeführt wird. Der aus der Korrelation entstandene Impuls wird detektiert und einem Terminal zugeordnet. Da bei dem erfindungsgemäßen Netzwerk durch unterschiedliche Startzeitpunkte der Signalisierungssequenzen eine Kollision vermieden wird und keine Nachrichtendecodierung nach einer auf einer Korrelation basierenden Impulsdetektion durchgeführt wird, sondern das Auftreten des aus der Signalisierungssequenz entstandenen Impulses als Signalisierungswunsch angesehen wird, kann eine Signalisierungsdetektion insbesondere bei hohen Verkehrsbelastungen robuster und schneller als beim Stand der Technik durchgeführt werden.

Zur Detektion einer Signalisierungssequenz wird in Abhängigkeit von dem Startzeitpunkt der Signalisierungssequenz und von den Kanaleigenschaften ein bestimmter Zeitbereich zur Impulsdetektion gewählt. Ein solcher Zeitbereich wird als Detektionsfenster bezeichnet. Die Länge oder Dauer und der Startzeitpunkt des Detektionsfensters muss so gewählt werden, dass eine Impulsdetektion möglich ist. Die Detektionsfenster sind kleiner als die Zeitdauer der aus dem Stand der Technik bekannten Meldungspakete. Mit der erfindungsgemäßen Signalisierung können also viele Terminals innerhalb eines kurzen Zeitbereiches einen Signalisierungswunsch absetzen.

Ein Terminal in einer Funkzelle hat nach der Registrierung und Synchronisierung für das Aussenden einer Signalisierungssequenz immer den gleichen Startzeitpunkt bezogen auf einen Referenzrahmen, solange die Basisstation diesen Startzeitpunkt nicht explizit ändert. Somit ist zunächst permanent für ein Terminal ein Signalisierungskanal belegt. Da in dem Referenzrahmen, der von kurzer Dauer (z.B. 10 ms) ist, viele solcher Startzeitpunkte enthalten sein können und da alle Terminals einer Funkzelle dieselbe Signalisierungssequenz verwenden, werden bei der permanenten Zuordnung eines Startzeitpunktes und einer Signalisierungssequenz zu einem Terminal, nur wenig Netzwerkressourcen verbraucht.

Die Signalisierungssequenzen aller Terminals in einer Funkzelle weisen unterschiedliche Startzeitpunkte auf. Es werden von jedem Terminal im einfachsten Fall die selben Signalisierungssequenzen verwendet. Die Signalisierungssequenzen können sich daher teilweise überlagern, da die Länge einer Sequenz in der Regel länger als der Abstand von zwei aufeinanderfolgenden Startzeitpunkten ist.

Ein Vorteil des erfindungsgemäßen Netzwerkes besteht auch in der Sicherheit des Erkennens eines Signalisierungswunsches. Es wird praktisch immer nach Sendung einer Signalisierungssequenz ein detektierbarer Impuls erzeugt. Das kommt daher, weil Störsignale und Kanalrauschen zu "künstlichen" Impulsen am Ausgang des Matched-Filters führen können. Es ist sehr unwahrscheinlich, dass diese die Amplitude der Impulse am Ausgang des Matched-Filters bei Empfang einer tatsächlich gesendeten Signalisierungssequenz verkleinern. Im schlechtesten Fall (z.B. bei Störungen) wird also ein Fehlalarm ausgelöst, wenn die Amplitude des Rausch- oder Störsignals die Detektionsschwelle überschreitet, ohne dass eine Signalisierungssequenz gesendet worden ist.

Die Signalisierungssequenz kann auch zur Anforderung von Kanalkapazität eines gemeinsam genutzten Kanals (shared uplink channel) verwendet werden. Die Basisstation weist nach Empfang einer Signalisierungssequenz entweder eine Anforderung ab oder bestätigt die Anforderung eines Terminals nach Kanalkapazität in einem von mehreren Terminals gemeinsam genutzten Kanal. Durch die Benutzung eines gemeinsam genutzten Kanals ergibt sich eine Kapazitätserhöhung aufgrund statischer Effekte.

Die Bestätigung oder Abweisung einer Kanalkapazität für wenigstens ein Terminal sendet die Basisstation zu dem betreffenden Terminal über einen Zuweisungs-Steuerkanal. Mit der Bestätigungsmeldung übermittelt die Basisstation noch weitere Informationen, welche die Übertragung der Nutzdaten über den gemeinsam genutzten Kanal betreffen. Solche Informationen können den Startzeitpunkt der Übertragung der Nutzdaten, die Datenrate, die Sendeleistung, den Spreizfaktor etc. betreffen.

Der gemeinsam benutzte Kanal kann z.B. von 8 Terminals zur Übertragung von Nutzdaten verwendet werden. Falls ein weiteres Terminal diesen Kanal benutzen möchte, sendet dieses Terminal eine weitere bestimmte Signalisierungssequenz aus. Die Basisstation überprüft, ob das Terminal in die Gruppe des von mehreren Terminals gemeinsam genutzten Kanals aufgenommen werden kann. Falls das Prüfergebnis positiv ist, teilt die Basisstation dem betreffenden Terminal mit, dass diese in die Gruppe aufgenommen wird.

Ausführungsbeispiele der Erfindung werden nachstehend anhand der Fig. näher erläutert. Es zeigen:

Fig. 1          ein drahtloses Netzwerk mit mehreren Basisstationen und Terminals,

Fig. 2 und 3    Folgen von Detektionsfenstern für ein in einer Basisstation verwendetes Matched-Filter in bezug auf einen Referenzrahmen,

Fig. 4          zwei beispielhafte von zwei Terminals ausgesendete Signalisierungssequenzen und die entsprechenden Detektionsfenster,

Fig. 5          die Position der aus der Detektierung von Signalisierungssequenzen gebildeten Impulse zur Übertragung von n-Bit-Signalisierungs-informationen,

Fig. 6          einen Empfänger einer Basisstation,

Fig. 7          einen Sender einer Basisstation,

Fig. 8          einen Empfänger eines Terminals und

Fig. 9          einen Sender eines Terminals.

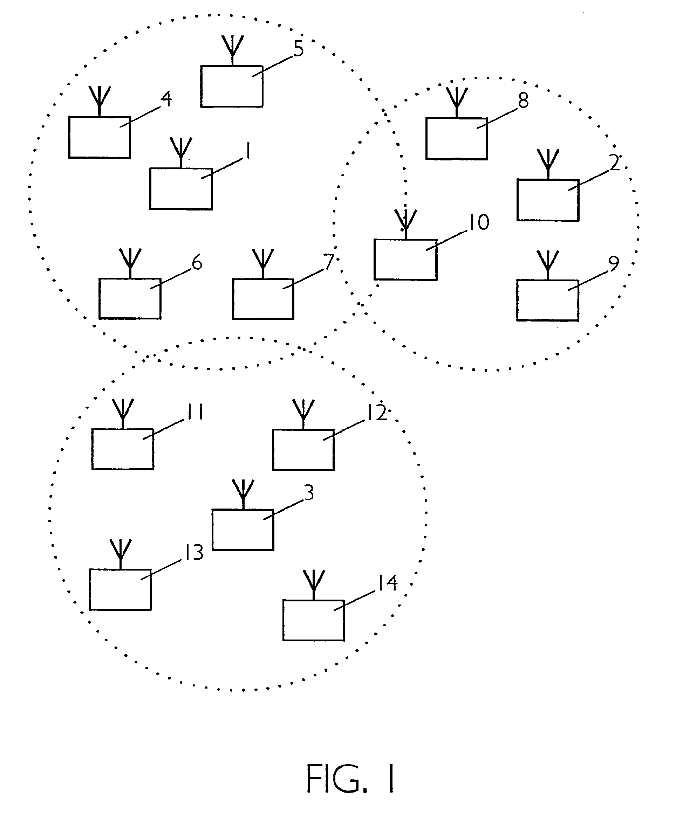

In Fig. 1 ist ein drahtloses Netzwerk, z.B. Funknetzwerk, mit mehreren Basisstationen 1 bis 3 und mehreren Terminals 4 bis 14 dargestellt. Einer Basisstation 1 bis 3 sind bestimmte Terminals 4 bis 14 zugeordnet. In dem in Fig. 1 dargestellten Beispiel sind der Basisstation 1 die Terminals 4 bis 7, der Basisstation 2 die Terminals 8 bis 10 und der Basisstation 3 die Terminals 11 bis 14 zugewiesen. Ein Steuerdatenaustausch findet zumindest zwischen der Basisstation und den Terminals statt. Ein Nutzdatenaustausch kann sowohl zwischen der Basisstation und den Terminals als auch direkt zwischen den Terminals durchgeführt werden. In beiden Fällen wird von der Basisstation die Verbindung zur Übertragung von Nutzdaten aufgebaut. Die Terminals 4 bis 14 sind in der Regel Mobilstationen, die von einer fest installierten Basisstation 1 bis 3 gesteuert werden. Eine Basisstation 1 bis 3 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_C$ bezeichnet. $1/T_C$ ist die Chiprate. Die Multiplikation bzw. Modulation des Datensignals mit dem pseudo-zufälligen Rechtecksignal hat eine Spreizung des Spektrums um den Spreizungsfaktor $N_C = T/T_C$ zur Folge, wobei T die Dauer eines Rechteckimpulses des Datensignals ist.

Den Basisstationen sind bestimmte Funkzellen zugeordnet, in denen der Datenverkehr mit den jeweils in der Funkzelle befindlichen Terminals abgewickelt wird. Bewegt sich ein Terminal aus einer Funkzelle in eine andere Funkzelle, so wird nach bestimmten Vorgaben die Zuordnung des Terminals von einer zur anderen Basisstation abgewickelt. Dabei kann dieses Terminal gleichzeitig beim Übergang von einer zu einer anderen Funkzelle mit den Basisstationen der beiden Funkzellen Daten austauschen. Dies wird als Soft-Handover bezeichnet. Eine Funkzelle ist in Fig. 1 durch einen gestrichelt gezeichneten Kreis angedeutet.

Nutzdaten und Steuerdaten zwischen wenigstens einem Terminal und einer Basisstation werden über von der Basisstation vorgegebene Kanäle übertragen. Die Funkverbindung von der Basisstation zu den Terminals wird als Downlink und von den Terminals zur Basisstation als Uplink bezeichnet. Somit werden über Downlink-Kanäle Daten von der Basisstation zu den Terminals und über Uplink-Kanäle von Terminals zur Basisstation gesendet. Beispielsweise kann ein Downlink-Steuerkanal vorgesehen sein, der benutzt wird, um von der Basisstation Steuerdaten vor einem Verbindungsaufbau an alle Terminals zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal zur Basisstation kann beispielsweise ein von der Basisstation zugewiesener Uplink-Steuerkanal verwendet werden, auf den aber auch andere Terminals zugreifen können. Ein Uplink-Kanal, der von mehreren oder allen Terminals benutzt werden kann, wird als gemeinsamer Uplink-Kanal (common uplink channel) bezeichnet. Nach einem Verbindungsaufbau z.B. zwischen einem Terminal und der Basisstation werden Nutzdaten über einen Downlink- und ein Uplink-Nutzkanal übertragen. Zur direkten Übertragung von Nutzdaten zwischen zwei Terminals, werden Kanäle verwendet, die als Peer-to-Peer-Nutzkanäle bezeichnet werden. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Ein Kanal ist durch einen Frequenzbereich, einen Zeitbereich und z.B. beim CDMA-Verfahren durch einen Spreizungscode bestimmt. Damit Nutzdaten zwischen Basisstation und einem Terminal ausgetauscht werden können, ist es erforderlich, dass das Terminal mit der Basisstation synchronisiert wird. Beispielsweise ist aus dem GSM-System (GSM = Global System for Mobile communication) bekannt, in welchem eine Kombination aus FDMA-und TDMA-Verfahren benutzt wird, dass nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden. Aus Vereinfachungsgründen wird im folgenden von einem Rahmen ausgegangen, der als Referenzrahmen bezeichnet wird.

Um eine Rahmensynchronisation durchführen zu können, müssen alle Terminals auf die Basisstation mit Hilfe von Impulsen, die von der Basisstation ausgesendet werden, synchronisiert werden. Falls kein Code-Spreiz-Verfahren (z.B. CDMA-Verfahren) angewendet wird (z.B. wird ein TDMA-Verfahren verwendet), entspricht die Impulsdauer genau dem für die Sendung eines Bits benötigten Zeitintervall. Bei Anwendung eines Code-Spreiz-Verfahrens entspricht die Impulsdauer einem Chipintervall. Ein Bitintervall entspricht dabei mehreren Chipintervallen. Zur Rahmensynchronisation ist die Sendung einer speziellen Impulssequenz durch die Basisstation erforderlich. Der Startzeitpunkt der Impulssequenz entspricht dem Startzeitpunkt eines Rahmens.

Im folgenden sei vorausgesetzt, dass die Terminals bereits mit der Basisstation synchronisiert und dort registriert sind. Bevor ein Terminal (z.B. eines der Terminals 4 bis 7 in Fig. 1) Nutzdaten senden und empfangen kann, muss diesem zur Übertragung ein Nutzkanal für eine Downlink- und eine Uplink-Verbindung oder ein Peer-to-Peer-Nutzkanal von der zugehörigen Basisstation (z.B. Basisstation 1 in Fig. 1) zur Verfügung gestellt werden. Hierzu sendet die Basisstation (z.B. die Basisstation 1 in Fig. 1) an die zugeordneten Terminals (z.B. die Terminals 4 bis 7) über einen Downlink-Verteil-Steuerkanal (downlink broadcast control channel) während eines frei wählbaren Rahmens Steuerdaten. Diese Steuerdaten unterrichten die Terminals darüber, zu welchem Zeitpunkt (Sequenz-Startzeitpunkt) bezogen auf den Rahmen diese jeweils eine spezielle Signalisierungssequenz senden können. Eine solche von einem Terminal gesendete Signalisierungssequenz ist ein pseudozufälliges Rechtecksignal und gibt an, dass dieses Terminal einen Nutzkanal anfordert. Jedem Terminal wird daher zur Aussendung einer Signalisierungssequenz von der Basisstation ein Uplink-Signalisierungskanal zugewiesen, über den Signalisierungssequenzen übertragen werden. Um die Anzahl der Sendung von Steuerdaten zu begrenzen, kann die Basisstation die Zuordnung der Signalisierungssequenz und des Sequenz-Startzeitpunkts für jedes Terminal nur einmal durchführen. Dies kann beispielsweise während der Registrierung eines Terminals bei der zugehörigen Basisstation passieren. Die Zuweisung der Sequenz-Startzeitpunkte kann aber auch - wie weiter unten erläutert wird - in Abhängigkeit von den unterschiedlichen Kanaleigenschaften der Verbindungen zwischen Basisstation und Terminals erfolgen. Ein Signalisierungskanal ist bei der Erfindung durch die bestimmte Signalisierungssequenz und deren Startzeitpunkt realisiert.

Alle einer Basisstation zugeordneten Terminals senden die gleiche Signalisierungssequenz aber zu unterschiedlichen Zeitpunkten (Sequenz-Startzeitpunkten) aus. Folglich weisen unterschiedliche Basisstationen ihren zugeordneten oder registrierten Terminals unterschiedliche Signalisierungssequenzen zu. Hierbei ist es allerdings ausreichend, wenn nur die benachbarten Basisstationen jeweils unterschiedliche Signalisierungssequenzen haben. Wenn ein Terminal beispielsweise bei einem Übergang von einer in eine andere Funkzelle bei zwei Basisstationen registriert ist, sendet dieses die Signalisierungssequenz aus, welche die Basisstation vorgibt, von der ein Nutzkanal angefordert wird.

Eine Basisstation enthält ein einziges Matched-Filter und einen nachgeordneten Impulsdetektor zur Detektion der von den Terminals ausgesendeten Signalisierungssequenzen. Das Matched-Filter wird mit einer Taktrate getaktet, die wenigstens gleich der maximalen Chiprate ist, wenn eine Codespreizung verwendet wird, oder gleich der maximalen Bitrate, wenn keine Codespreizung verwendet wird. Von den Terminals werden solche Signalisierungssequenzen ausgesendet, die eine gute Autokorrelationseigenschaft aufweisen. Das bedeutet, dass die sich am Ausgang des Matched-Filters aus aufeinanderfolgenden Signalisierungssequenzen verschiedener Terminals ergebenen Impulse innerhalb eines Detektionsfensters von dem Impulsdetektor eindeutig detektiert werden können. Die Wahl der Taktrate in Abhängigkeit von der maximalen Chiprate bzw. Bitrate und einer Signalisierungssequenz mit guten Autokorrelationseigenschaften ermöglicht, dass die aufeinanderfolgenden Signalisierungssequenzen einen minimalen zeitlichen Abstand zwischen Ihren Startzeitpunkten aufweisen. Weiterhin sollte die Signalisierungssequenz eine gute Kreuzkorrelationseigenschaft aufweisen, d.h. die Korrelation zu anderen im Netzwerk übertragenen Signalen sollte gering sein. Somit werden einerseits die anderen im Netzwerk übertragenen und vom Matched-Filter empfangenen Signale vom Impulsdetektor als ein vernachlässigbares Rauschsignal und andererseits werden die Signalisierungssequenzen von anderen Schaltungselementen in der Basisstation, welche die anderen im Netzwerk übertragenen Signale verarbeiten, als vernachlässigbares Rausch- bzw- Störsignal interpretiert. Eine solche Signalisierungssequenz mit guten Auto- und Kreuzkorrelationseigenschaften ist beispielsweise die aus dem Buch "J.G. Proakis: Digital Communications von J.G. Proakis, Third Edition, McGraw-Hill International Editions, 1995, Seiten 724 bis 729" bekannte Sequenz von Gold und Kasami.

Die sich am Ausgang des Matched-Filters ergebenen Impulse sind ein Maß für die Energie der Signalisierungssequenzen. Die Länge und die im Gegensatz zu den anderen zu übertragenden Signale niedrige Amplitude der Signalisierungssequenz bestimmt demzufolge die Impulshöhe am Ausgang des Matched-Filters.

Der Sequenz-Startzeitpunkt einer Signalisierungssequenz sollte von der Basisstation so festgelegt werden, dass das Matched-Filter in der Basisstation einen Impuls nach der Detektion einer Signalisierungssequenz eines ihr zugeordneten Terminals in einem vorgegebenen Detektionsfenster erzeugt. Dieses Detektionsfenster weist die Dauer oder Länge $\delta$ auf.

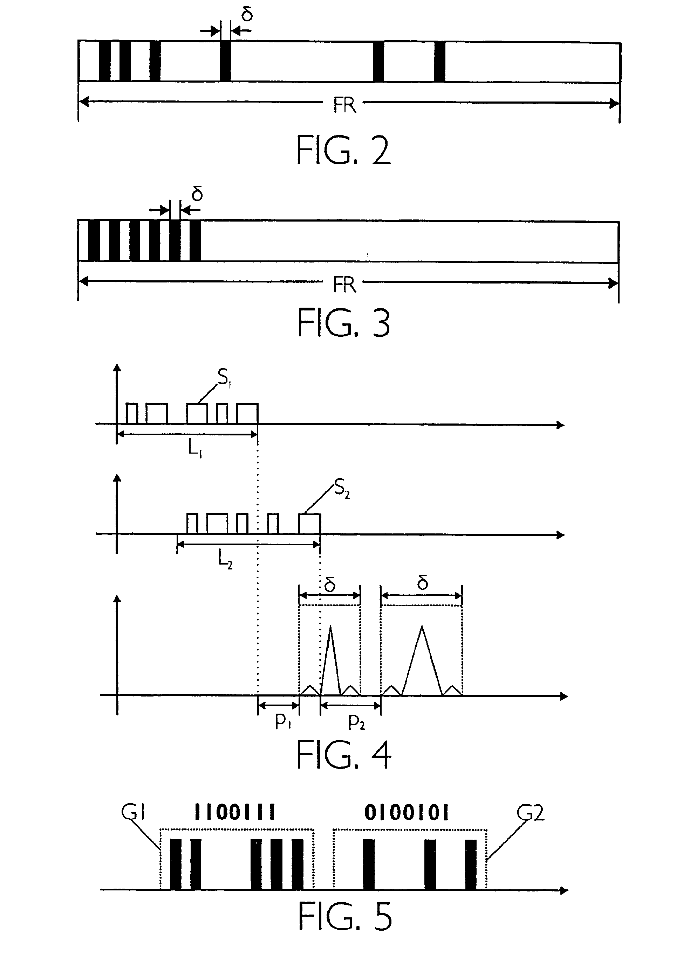

Prinzipiell lassen sich die Signalisierungssequenzen zu beliebigen Sequenz-Startzeitpunkten aussenden. Ein Sequenz-Startzeitpunkt ist mit dem Auftreten eines Impulses am Ausgang des Matched-Filters verbunden. Die Detektion beginnt nach Aussendung einer Signalisierungssequenz und einer durch die Kanaleigenschaft einer Verbindung zwischen wenigstens einem Terminal und einer Basisstation bedingten Verzögerung. Als Kanaleigenschaft werden die physikalischen Kenngrößen eines Kanals bezeichnet. Eine Kanaleigenschaft ergibt sich beispielsweise aus der Entfernung zwischen Terminal und Basisstation. Folglich ist es möglich, dass der Impulsdetektor unterschiedlich breite Detektionsfenster für die verschiedenen Terminals benutzt. Der Einfachheit halber wird hier eine einheitliche Breite des Detektionsfensters gewählt. Die Folge beliebig auftretender Detektionsfenster der Dauer $\delta$ ist in bezug auf den Referenzrahmen der Länge FR in Fig. 2 gezeigt. Das Matched-Filter erzeugt aus einer empfangenen Signalisierungssequenz in der Regel eine Impulsfolge mit einem Hauptimpuls und mehreren häufig symmetrisch um den Hauptimpuls verteilten Nebenimpulsen. Die Amplitude der Nebenimpulse ist regelmäßig kleiner als die Amplitude des Hauptimpulses.

Die verschiedenen vom Matched-Filter erzeugten Hauptimpulse müssen einen ausreichenden Abstand (guard time) aufweisen, damit sich die am Ausgang des Matched-Filters erscheinenden, durch den Kanal verzerrte Impulsfolge der unterschiedlichen Terminals nicht so überlappen, dass keine eindeutige Detektion möglich wird. Bei einer bestimmten Überlappung kann die Basisstation die Impulse nicht eindeutig einem Terminal zuordnen. Die Breite oder Dauer $\delta$ des Detektionsfensters muss also mindestens gleich der Hauptimpulsbreite sein, die sich ohne Kanaleinfluss ergibt, und einem zusätzlichen kanalabhängigen Sicherheitsintervall sein. Daraus ergibt sich auch der Abstand von aufeinanderfolgenden, gleichen Signalisierungssequenzen. Es muss jedoch keine Rücksicht auf die zeitlichen Abstände von zwei unterschiedlichen Signalisierungssequenzen genommen werden, die von unterschiedlichen Basisstationen stammen, weil aufgrund geringer Korrelation ein dem Matched-Filter nachgeschalteter Impulsdetektor eine Signalisierungssequenz einer anderen Basisstation bzw. Funkzone als nicht störendes Rauschen detektiert.

Um möglichst viele Signalisierungssequenzen innerhalb eines vorgegebenen Zeitraumes auszusenden, kann erfindungsgemäß ein optimierter Abstand der Sequenz-Startzeitpunkte vorgesehen sein. Das bedeutet, dass jeweils die Breite des Detektionsfensters in Abhängigkeit von den Kanaleigenschaften zwischen einem Terminal und der Basisstation ermittelt wird. Eine andere erfindungsgemäße, einfacher zu realisierende Möglichkeit besteht darin, dass die Signalisierungssequenzen aufeinanderfolgend mit einem konstanten Abstand gesendet werden. Bei der Bestimmung des konstanten Abstandes sind die schlechtesten Kanaleigenschaften zu berücksichtigen. Fig. 3 zeigt die kontinuierlich aufeinanderfolgenden Detektionsfenster in bezug auf den Referenzrahmen der Länge FR, die sich als Folge der mit einem vorgegebenen konstanten Abstand ausgesendeten Signalisierungssequenzen ergeben.

In Fig. 4 sind zwei beispielhafte Signalisierungssequenzen $S_1$ und $S_2$ gezeigt, welche die Sequenzdauer oder Sequenzlänge $L_1$ und $L_2$ aufweisen. Nach einer durch die Kanaleigenschaften bedingten Verzögerungszeit $p_1$ und $p_2$ startet jeweils der Detektionsvorgang bzw. das Detektionsfenster der Länge $\delta$. In einem solchen Detektionsfenster erscheint ein einer Signalisierungssequenz zugeordneter Hauptimpuls und Nebenimpulse.

Die Länge $\delta$ des Detektionsfensters wird insbesondere durch drei Faktoren (Kanaleigenschaften) bestimmt. Erstens muss die Genauigkeit der Abschätzung der Ausbreitungsverzögerung (propagation delay) der zu übertragenden Daten von den Terminals zu der Basisstation, zweitens die Impulsverbreiterung (delay spread characteristic) aufgrund von Mehrfachausbreitung (multi-path) und drittens die Autokorrelationseigenschaften der Signalisierungssequenzen der Terminals in Betracht gezogen werden.

In einer Funkzelle sind die Terminals in der Regel unterschiedlich weit entfernt von der Basisstation. Dies führt zu unterschiedlichen Ausbreitungsverzögerungen der von den Terminals ausgesendeten Signalisierungssequenzen. Es soll die Ausbreitungsverzögerung zwischen dem Terminal $MT_i$ und der Basisstation B gleich $p_i$ und die Länge der Signalisierungssequenz gleich L sein. Wenn die Basisstation einen Impuls für das Terminal $MT_i$ am Ausgang des Matched-Filters zum Zeitpunkt $t_i$ erwartet, weist es das Terminal MT, an, mit der Übertragung der Signalisierungssequenz zum Zeitpunkt $t_1 - p_i - L$ zu beginnen. Jedoch wegen der begrenzten Genauigkeit der Abschätzung der Ausbreitungsverzögerung $p_i$ ist der Impuls am Ausgang des Matched-Filters mit einer Ungenauigkeit behaftet. Diese Ungenauigkeit in der Abschätzung der Ausbreitungsverzögerung $p_i$ muss durch ein genügend langes Detektionsfenster $\delta$ kompensiert werden. Beträgt die maximale Ungenauigkeit in der Abschätzung für alle Terminals j, muss das Detektionsfenster größer als j sein.

Die Daten zwischen einem Terminal und einer Basisstation werden in der Regel nicht nur über einen Funkweg sondern über mehrere übertragen (Mehrfachausbreitung). Aufgrund von Reflexions- und Beugungseffekten läuft das von einem Terminal zur Basisstation übertragene Signal über verschiedene Wege und die sich daraus ergebenden, über verschiedene Wege laufende Signale werden von der Basisstation zu unterschiedlichen Zeitpunkten empfangen. Dadurch ergibt sich am Ausgang des Matched-Filters für eine Signalisierungssequenz nicht nur ein einzelner Hauptimpuls, sondern es erscheinen am Ausgang des Matched-Filters weitere Hauptimpulse. Diese weiteren Hauptimpulse entstehen am Ausgang des Matched-Filters durch Signale, die durch die Mehrfachausbreitung entstanden sind und die um den eigentlichen Hauptimpuls gruppiert sind. Der eigentliche Hauptimpuls entsteht am Ausgang des Matched-Filters aus der empfangenen eigentlichen Signalisierungssequenz. Daher muss die Länge δ des Detektionsfensters größer als ein Fenster der Länge w gewählt sein, welches den eigentlichen Hauptimpuls und die weiteren Hauptimpulse enthält. Es sei bemerkt, dass auch ohne Mehrfachausbreitung am Ausgang des Matched-Filters nicht nur ein eigentlicher Hauptimpuls, sondern auch Nebenimpulse erscheinen. Die Amplitude der Nebenimpulse ist jedoch viel kleiner als die Amplitude des Hauptimpulses aufgrund der oben geschilderten guten Autokorrelationseigenschaften.

Die Autokorrelationseigenschaft der Signalisierungssequenz ist das Maß für die Breite des Hauptimpulses und der Minima und Maxima der Nebenimpulse am Ausgang des Matched-Filters (ohne Berücksichtigung der Kanaleigenschaften). Bei einer Gold- oder Kasami-Sequenz ist - wie oben erwähnt - der Hauptimpuls am Ausgang des Matched-Filters ungefähr gleich der Energie der Signalisierungssequenz. Die Amplitude des Hauptimpulses ist dabei sehr viel größer als die der Nebenimpulse. Die Energie der Signalisierungssequenz wird also bestimmt durch deren Amplitude und Dauer bzw. Länge. Um die Interferenz mit anderen Signalen zu reduzieren, sollte die Signalisierungssequenz (z.B. Gold- oder Kasami-Sequenz) eine gegenüber den anderen Signalen bedeutend geringere Amplitude aufweisen. Damit aber eine Detektion einer Signalisierungssequenz mit Hilfe des Matched-Filters möglich ist, muss die Signalisierungssequenz genügend lang sein. Hierdurch verlängert sich die Detektionsdauer einer Signalisierungssequenz und damit die Zuweisung von Nutzkanälen der Basisstation zu dem Terminal (Verlängerung der Signalisierungszeit), welches eine Signalisierungssequenz gesendet hat. Also beeinflusst die Länge einer Signalisierungssequenz sowohl die Autokorrelationseigenschaft der Signalisierungssequenz als auch die Signalisierungszeit. Wenn für eine gegebene Signalisierungssequenz die Autokorrelationsfunktion innerhalb eines Zeitintervalls q hinreichend groß ist, muss δ größer als q sein.

Es ist also festzuhalten, dass die Länge oder Dauer δ des Detektionsfensters gleich der Summe der Werte von j, w und q gewählt werden muss:

$$\delta = j + w + q$$

Bisher ist der Fall beschrieben worden, dass die Dauer δ des Detektionsfenster so bemessen ist, dass nur eine einzige Signalisierungssequenz detektiert werden kann. Das bedeutet, das eine Basisstation eine binäre Information oder 1-Bit-Information erhält. Diese binäre Information gibt an, ob ein Terminal, welches die Signalisierungssequenz ausgesendet hat, einen neuen Nutzkanal (Impuls am Ausgang des Matched-Filters während der Dauer des Detektionsfensters vorhanden) oder keinen Nutzkanal anfordert (Impuls am Ausgang des Matched-Filters während der Dauer des Detektionsfensters nicht vorhanden). Im folgenden wird die Ausweitung der Übertragung von einer 1-Bit- zu einer n-Bit-Information (n>1, n ist ganze Zahl). Hierbei sendet ein Terminal die gleiche Signalisierungssequenz nicht einmal sondern mehrmals hintereinander pro Referenzrahmen aus, um der Basisstation eine n-Bit-Information zur Verfügung zu stellen. Diese Erweiterung von einer 1-Bit- zu einer n-Bit-Information wird durch eine Verlängerung des Detektionsfensters erreicht, indem die Dauer oder Länge des Detektionsfensters für jedes betroffene Terminal um den Faktor n vergrößert wird. Damit können während des Auftretens des n-fach vergrößerten Detektionsfensters n Signalisierungssequenzen eines Terminals detektiert werden. Das Terminal, welches eine n-Bit-Infomation (Signalisierungsdaten) überträgt, verwendet gleiche Signalisierungssequenzen, deren Startzeitpunkte um den Wert δ jeweils verschoben sind. Eine ausgesendete Signalisierungssequenz gibt dann beispielsweise eine "1" und eine nicht ausgesendete Signalisierungssequenz eine "0" an.

In Fig. 5 ist ein Beispiel für die Position von aus gleichen Signalisierungssequenzen detektierten Impulse dargestellt. Eine erste Gruppe G1 von Impulsen ist Signalisierungssequenzen eines ersten Terminals und eine zweite Gruppe G2 von Impulsen ist Signalisierungssequenzen eines zweiten Terminals zugeordnet. Aus der ersten Gruppe G 1 ergibt sich die 7-Bit-Information "1100111" und aus der zweiten Gruppe G2 die Information "0100101".

Mit der Übertragung von n-Bit-Informationen eines Terminals sind verschiedene Signalisierungsanwendungen denkbar. Beispielsweise kann die Information "000", was einer Nichtaussendung von drei aufeinanderfolgenden Signalisierungssequenzen entspricht, bedeuten, dass das Terminal keinen Nutzkanal anfordert. Die Information "001" kann bedeuten, dass das Terminal einen 8-kBit/s-Nutzkanal anfordert. Durch zwei nicht ausgesendete und eine ausgesendete Signalisierungssequenz wird die Information "001" erzeugt. Der Wunsch nach einen 64-kBit/s-Nutzkanal eines Terminals kann durch die Information "010" und der Wunsch nach einem 144-kBit/s-Nutzkanal eines Terminals kann durch die Information "011" ausgedrückt werden.

Das Matched-Filter in der Basisstation ist hierbei für den Empfang sowohl von 1-Bit- als auch von n-Bit-Informationen vorgesehen, da in beiden Fällen die gleiche Signalisierungssequenz empfangen wird. Es unterscheidet sich in den beiden Fällen nur die Nachverarbeitung der vom Matched-Filter detektierten Impulse. Eine Informationsverarbeitung wird im ersten Fall nach der Dauer δ für die Detektion einer Signalisierungssequenz und im zweiten Fall nach der Dauer nδ für die Detektion von n Signalisierungssequenzen durchgeführt.

Ein weiterer Punkt der Erfindung betrifft die Erhöhung der Signalisierungskanäle. Die Anzahl der Signalisierungskanäle einer Basisstation bei Verwendung einer einzigen Signalisierungssequenz ist auf den Wert FR/δ begrenzt, wobei FR die Länge des Referenzrahmens und δ die Länge eines Detektionsfensters ist. Hierbei ist angenommen, dass nur 1-Bit-Informationen übertragen werden, jedes Detektionsfenster gleich lang ist und die Länge δ aufweist. Falls eine Basisstation mehr Signalisierungskanäle zuweisen möchte, als durch den Wert FR/δ gegeben sind, kann diese den Terminals nicht nur eine einzige sondern unterschiedliche Signalisierungssequenzen zuweisen. Beispielsweise können während eines Referenzrahmens 100 gleiche Signalisierungssequenzen vom Matched-Filter detektiert werden. Sind aber z.B. 120 Terminals in der Funkzelle, die eine Signalisierungssequenz senden wollen, so ist es nicht möglich, dass alle diese 120 Terminals die gleiche Signalisierungssequenz verwenden. Daher können z.B. 60 Terminals eine erste und die anderen 60 Terminals eine zweite Signalisierungssequenz aussenden, die dann von zwei unterschiedlichen Matched-Filtern in der Basisstation detektiert werden können. Es sei noch erwähnt, dass die Sequenz-Startzeitpunkte der unterschiedlichen Signalisierungssequenzen unabhängig voneinander sind, also eine Koordinierung aufeinander nicht erforderlich ist. Nur die Startzeitpunkte der gleichen Signalisierungssequenzen müssen aufeinander abgestimmt werden.

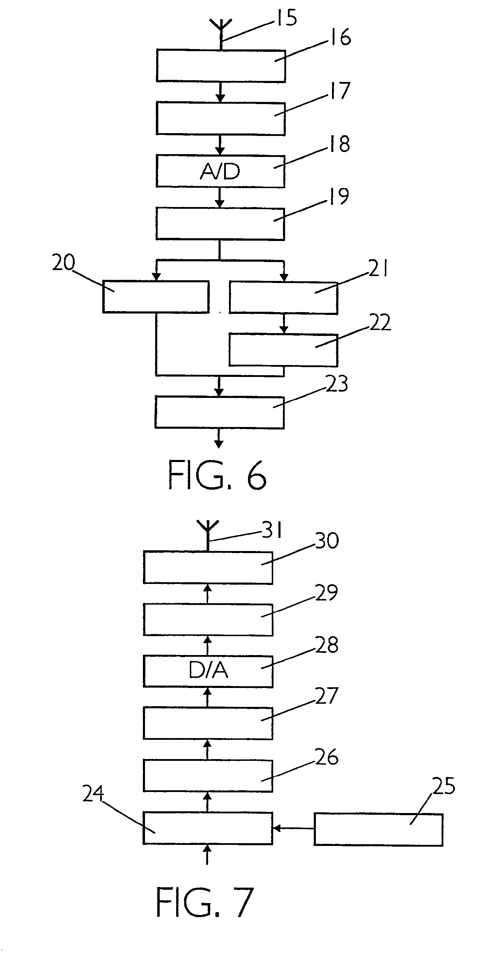

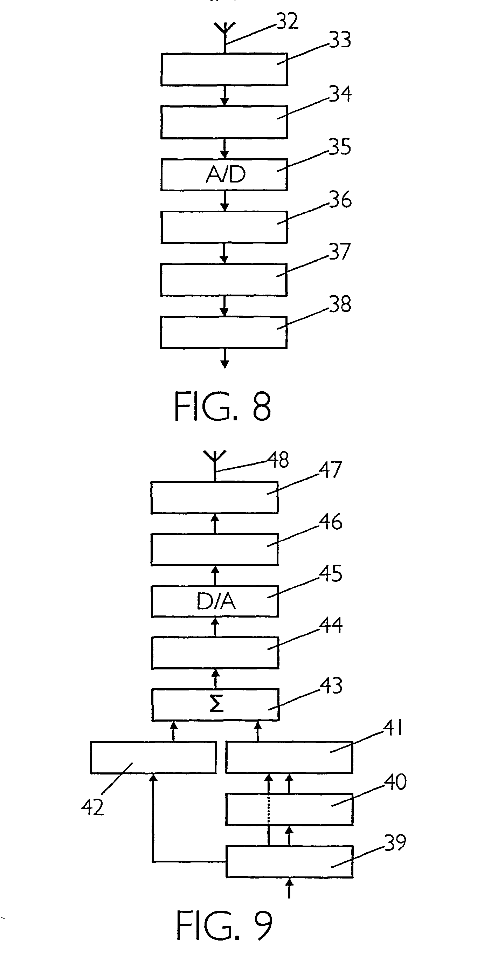

Die Erfindung kann in jedem existierenden oder noch einzuführenden Mobilfunksystem, wie z.B. GSModer auf WB-CDMA bzw. CD/TDMA basierenden UMTS-Mobilfunksystem (UMTS = Universal Mobile Telecommunication System) als zusätzliche Schaltungsteile eingefügt werden. In den Fig. 6 bis 9 ist ein Empfänger (Fig. 6) und ein Sender (Fig. 7) einer Basisstation und ein Empfänger (Fig. 8) und ein Sender (Fig. 9) eines Terminals dargestellt.

Das in Fig. 6 gezeigte Blockschaltbild eines Empfängers einer Basisstation enthält als bekannte Elemente (z.B. aus dem GSM-Mobilfunksystem oder einem CDMA-System) eine Antenne 15, einen Hochfrequenzblock 16, einen Zwischenfrequenzblock 17, einen Analog-Digital-Umsetzer 18 einen Demodulator 19 und einen Block 20, der z.B. die Schaltfunktionen Kanaldemultiplex, Deinterleaving, Kanaldecodierung und bei Verwendung eines CDMA-Systems auch eine Entspreizung (despreading) ausführt. Die im Basisband vorliegenden Steuer- und Nutzsignale werden einem Kanalzugriffssteuerblock 23 zugeführt, der die verschiedenen Signale an die entsprechenden Einheiten zur Weiterverarbeitung, wie z.B. einer Vermittlungsstelle weiterleitet. Erfindungsgemäß ist in den Empfänger der Basisstation ein Matched-Filter 21 eingefügt, welches die empfangenen Signale daraufhin überprüft, ob eine Signalisierungssequenz vorliegt. Ist eine Signalisierungssequenz während des erwarteten Zeitraumes (Detektionsfenster) detektiert worden, d.h. es wird wenigstens ein Impuls erzeugt, wird dies von einem nachfolgenden Impulsdetektor 22 festgestellt und dem Kanalzugriffssteuerblock 23 gemeldet, der z.B. ein Prozessor sein kann. Der Kanalzugriffssteuerblock 23 leitet diese Meldung an nachgeordnete hier nicht dargestellte weitere Steuerungselemente weiter, die dann z.B. mittels generierter Steuerdaten über den Sender der Basisstation dem Terminal einen Nutzkanal zuweisen.

Die Dauer oder Länge δ des Detektionsfensters kann fest vorgegeben sein und beispielsweise durch Messungen vor dem normalen Betrieb des Netzwerks festgelegt worden sein. Es ist auch möglich die Dauer δ des Detektionsfensters für jedes Terminal individuell während des Betriebs zu bestimmen. Die Dauer δ des Detektionsfensters für eine bestimmte Signalisierungssequenz und eines Terminals wird in diesem Fall von einem hier nicht näher dargestellten Steuerungselement dem Impulsdetektor nach der Auswertung von Messergebnissen zugeführt. Beim GSM-Mobilfunksystem wird beispielsweise die Entfernung zwischen einer Basisstation und einem Terminal anhand der vom Terminal empfangenen Signale in der Basisstation ausgewertet.

Die Informationsverarbeitung der vom Impulsdetektor 22 ermittelten vom Matched-Filter 21 erzeugten Impulse wird in dem Kanalzugriffssteuerblock 23 durchgeführt. Ein bestimmte Detektionsfenster ist einem Terminal zugeordnet. Wird in einem solchen Detektionsfenster wenigstens ein Hauptimpuls detektiert, stellt der Kanalzugriffssteuerblock 23 fest, dass eine Anfrage des Terminals nach einem Nutzkanal vorliegt. Aus dieser Anfrage und Anfragen weiterer Terminals und unter Betrachtung der bestehenden Verbindungen bzw. der vergebenden Nutzkanäle, entscheidet ein nicht näher dargestelltes Steuerelement nach Empfang der Anfrage vom Kanalzugriffssteuerblock 23, ob dem anfragenden Terminal ein Nutzkanal zur Verfügung gestellt werden kann. Falls eine Zuweisung eines Nutzkanals möglich ist, wird dieser Nutzkanal bestimmt und nach Verarbeitung im Sender der Basisstation (Fig. 7) über einen Downlink-Verteil-Steuerkanal dem Terminal zugeführt.

Der in Fig. 7 dargestellte Sender der Basisstation enthält ebenfalls einen Kanalzugriffssteuerblock 24, der Daten von verschiedenen Quellen 25 erhält. Eine solche Quelle kann beispielsweise eine Vermittlungsstelle sein, die Nutzdaten liefert, oder ein Steuerungselement, welches Steuerdaten zuführt. Beispielsweise können diese Steuerdaten Informationen über einen zu verwendenden Nutzkanal für ein Terminal enthalten, welches mittels einer Signalisierungssequenz zuvor einen Nutzkanal angefordert hat. Der dem Steuerblock 24 nachfolgende Block 26, der z.B. die Schaltfunktionen Kanalcodierung, Interleaving, Kanalmultiplex und bei Verwendung eines CDMA-Systems auch eine Spreizung (spreading) durchführt. Das Ausgangssignal des Blocks 26 wird über einen Modulator 27, einem Digital-Analog-Umsetzer 28, einem Zwischenfrequenzblock 29 und einem Hochfrequenzblock 30 zu einer Antenne 31 gegeben. Alle Elemente 25 bis 31 können aus existierenden Mobilfunksystemen bekannte Elemente sein.

Ein Blockschaltbild eines Empfängers eines Terminals zeigt Fig. 8. Dieser Empfänger enthält als beispielsweise aus dem GSM-Mobilfunksystem oder einem CDMA-System bekannte Elemente eine Antenne 32, einen Hochfrequenzblock 33, einen Zwischenfrequenzblock 34, einen Analog-Digital-Umsetzer 35, einen Demodulator 36, einen Block 37 mit verschiedenen Funktionen und einen Kanalzugriffssteuerblock 38, der Steuer- und Nutzdaten an verschiedene Senken (z.B. Niederfrequenzschaltung zur Umsetzung von Nutzdaten in Sprachdaten). Der Block 37 ist beispielsweise für die Schaltfunktionen Kanaldemultiplex, Deinterleaving, Kanaldecodierung und bei Verwendung eines CDMA-Systems für die Entspreizung zuständig. Der Kanalzugriffssteuerblock 38 wertet bestimmte für das Terminal relevante Kanäle, wie z.B. einen Nutzkanal oder einen Downlink-Verteil-Steuerkanal aus. Diese Informationen werden an bestimmte andere hier nicht dargestellte Schaltungselement im Terminal geleitet. Aus dem Downlink-Verteil-Steuerkanal entnimmt der Kanalzugriffsblock 38 beispielsweise die Information, zu welchem Startzeitpunkt, wenigstens eine Signalisierungssequenz ausgesendet werden kann. Diese Information wird an wenigstens ein hier nicht näher dargestelltes Schaltungselement geleitet.

Das Terminal enthält in seinem Sender, dessen zugehöriges Blockschaltbild in Fig. 9 dargestellt ist, ebenfalls ein Kanalzugriffssteuerblock 39, der einen Kanalzugriff steuert. Der Kanalzugriffssteuerblock 39 liefert einem Block 42, der z.B. die Schaltfunktionen Kanalcodierung, Interleaving, Kanalmultiplex und bei Verwendung eines CDMA-Systems auch eine Spreizung durchführt. Ferner gibt der Kanalzugriffssteuerblock 39 einem Zeitsteuerelement 40 den Startzeitpunkt einer Signalisierungssequenz an. Die Nutz- und Steuerdaten erhält der Kanalzugriffssteuerblock 39 von verschiedenen Quellen. Eine solche Quelle kann beispielsweise eine Niederfrequenzschaltung sein, die Sprachdaten als Nutzdaten liefert, oder ein Steuerungselement, welches Steuerdaten zuführt. Beispielsweise können diese Steuerdaten Informationen über den Startzeitpunkt einer Signalisierungssequenz sein. Das Zeitsteuerelement 40 liefert Zeitmarken an einen Generator 41 zur Erzeugung einer Signalisierungssequenz. Die Zeitmarken können beispielsweise die Start- und Endzeitpunkte von rechteckförmigen Impulsen der Signalisierungssequenz sein. Der Generator enthält einen Speicher zur Speicherung verschiedener Signalisierungssequenzen. Die auszusendende Signalisierungssequenz wird von dem Kanalzugriffssteuerblock ausgewählt. In den Speicher des Generators 41 können gegebenenfalls Signalisierungssequenzen eingeschrieben werden. Der Generator 41 und das Zeitsteuerelement 40 werden nach Empfang der Information über die zu verwendende Signalisierungssequenz und des Startzeitpunktes der Signalisierungssequenz initialisiert. Wenn keine Änderung der Signalisierungssequenz und/oder des Startzeitpunktes von der zugeordneten Basisstation angezeigt wird, ist eine weitere Initialisierung von Generator 41 und Zeitsteuerelement 40 nicht erforderlich.

Die im Block 42 bearbeiteten Nutz- und Steuerdaten werden einer Überlagerungsschaltung 43 geliefert, die noch die Ausgangssignale des Generators 41 erhält. Das von der Überlagerungsschaltung 43 abgegebene Ausgangssignal wird über einen Modulator 44, einem Digital-Analog-Umsetzer 45, einem Zwischenfrequenzblock 46 zu einem Hochfrequenzblock 47 übertragen, der mittels einer Antenne 48 die im Hochfrequenzblock gebildeten Signale abstrahlt.

Wie oben beschrieben worden ist, wird eine von einem Terminal gesendete Signalisierungssequenz dazu verwendet, einen Nutzkanal von der zugeordneten Basisstation anzufordern. Dies ist in der Regel ein dedizierter Kanal (dedicated channel). Diese Anforderung erfolgt, nachdem ein Terminal mit der Basisstation synchronisiert und dort registriert worden ist.

Die Signalisierungssequenz kann auch zur Anforderung eines gemeinsam genutzten Uplink-Nutzkanals (shared uplink channel) zur Übertragung von Paketen verwendet werden. Ein gemeinsam genutzter Uplink-Nutzkanal ist ein Kanal zur gleichzeitigen Übertragung von Nutzdaten von mehreren Terminals zur Basisstation. Beispielsweise können 8 von der Basisstation festgelegte Terminals gleichzeitig diesen Kanal nutzen.

Wird von einem Terminal zu einem von der Basisstation festgelegten Startzeitpunkt eine Signalisierungssequenz gesendet, bedeutet dies die Anforderung einer bestimmten Kapazität (z.B. 16 kBit/s) des Kanals zur Übertragung von Nutzdaten. Die Basisstation sendet über einen speziellen Steuerkanal, der als Zuweisungs-Steuerkanal (Access Control Channel) bezeichnet wird, eine Bestätigung (confirmation) oder Abweisung (rejection) der Reservierung von Kanalkapazität. Mit der Bestätigung der Kapazitätsreservierung wird dem Terminal noch über den Zuweisungs-Steuerkanal verschiedene zur Übertragung der Nutzdaten notwendige Informationen mitgeteilt. Wird ein CDMA-Verfahren zur Übertragung der Nutzdaten verwendet, wird über den Zuweisungs-Steuerkanal dem Terminal der Startzeitpunkt der Übertragung der Nutzdaten, die Datenrate, die Sendeleistung und der Spreizfaktor für den gemeinsam genutzten Uplink-Nutzkanal übermittelt. Nachdem das Terminal die Informationen über den Startzeitpunkt und den Spreizfaktor erhalten hat, startet das Terminal mit der Übertragung der in Pakete verpackten Nutzdaten.

Beispielsweise sind von der Basisstation eine bestimmte Anzahl von Terminals (z.B. 8) festgelegt, die den gemeinsam genutzten Uplink-Nutzkanal zu Übertragung von in Paketen verpackten Nutzdaten verwenden können. Ein Terminal, welches bisher nicht Benutzer diesen gemeinsam genutzten Uplink-Nutzkanals ist, kann nach einer entsprechenden Anforderung als neuer Nutzer des Kanals von der Basisstation bestimmt werde. Hierbei kann entweder für das neue Terminal ein anderes Terminal, welches bisher Teil der Gruppe der den gemeinsam genutzten Uplink-Nutzkanal verwendenden Terminals ist, entfernt werden oder das neue Terminal zusätzlich zur Gruppe hinzugefügt werden, wenn die Kanalkapazität noch freie Ressourcen aufweist. Hierbei muss darauf geachtet werden, dass die innerhalb des Systems erzeugte Interferenz durch die Hinzufügung des Terminals nicht überschritten wird. Wenn ein Terminal entfernt werden soll, wird z.B. das Terminal von der Basisstation entfernt, wenn dieses Terminal für den gemeinsam genutzten Uplink-Nutzkanal eine bestimmte Zeit keine Kanalkapazität (das ist: Sendeenergie für bestimmte Datenrate, Zeitschlitz, Spreizfaktor, Trägerfrequenz) mehr angefordert hat.

Ein Terminal, welches Nutzer des gemeinsam genutzten Uplink-Nutzkanals werden möchte, sendet eine Signalisierungssequenz zu einem von der Basisstation festgelegten Startzeitpunkt. Dieser Startzeitpunkt kann den Terminals bekannt sein oder wird von der Basisstation jeweils dem Terminal mitgeteilt, nachdem dieses über einen z.B. kollisionsbehafteten Kanal den Startzeitpunkt angefordert hat. Nach Empfang der Signalisierungssequenz überprüft die Basisstation, ob ein Terminal aus der Gruppe der den gemeinsam genutzten Uplink-Nutzkanal verwendenden Terminals entfernt werden muss. Ist dies der Fall wird den beiden betreffenden Terminals über den Zuweisungs-Steuerkanal mitgeteilt, dass ein Terminal aus der Gruppe entfernt und ein anderes aufgenommen worden ist. Anderenfalls wird über den Zuweisungs-Steuerkanal nur mitgeteilt, dass ein neues Terminal in die Gruppe aufgenommen worden ist.

Der Vorteil eine Signalisierungssequenz für die Anforderung von Kanalkapazität im gemeinsam genutzten Uplink-Steuerkanal oder für die Anfrage über die Aufnahme in die Gruppe der den gemeinsam genutzten Uplink-Steuerkanal verwendenden Terminals anzuzeigen ist, dass keine Kollision auftreten kann. Ferner ist dadurch, dass ein gemeinsam genutzter Uplink-Steuerkanal z.B. zur Übertragung von Nutzdaten in Paketen verwendet wird anstelle verschiedener dedizierter Nutzkanäle, eine Kapazitätserhöhung aufgrund statistischer Multiplex-Effekte erfolgt. Dadurch, dass die Basisstation den Terminals die Sendeleistung für die Übertragung der Nutzdaten jeweils mitteilt, lässt sich die Interferenz des Systems besser kontrollieren.

**Patentansprüche**

1. Drahtloses Netzwerk mit mindestens einer Basisstation (1-3) und mehreren zugeordneten Terminals (4-14) zum Austausch von Nutz- und Steuerdaten, bei dem die Terminals (4-14) zur Kanalkapazitätsanforderung eine Signalisierungssequenz aussenden, und die Basisstation (1-3) eine Korrelationsvorrichtung (21, 22) zur Korrelation eines von einem der zugeordneten Terminals gesendeten Signals aufweist, welches die Signalisierungssequenz enthält, wobei die Korrelationsvorrichtung (21, 22) zur Detektion eines aus der Signalisierungssequenz entstandenen Impulses verwendet wird und die Basisstation eine Kanalzugriffssteuerung (23) enthält, die nach Detektion der Signalisierungssequenz zur Abweisung oder Bestätigung der Kanalkapazitätsanforderung des Terminals (4-14) für einen von mehreren Terminals gemeinsam genutzten Kanal vorgesehen ist,

**dadurch gekennzeichnet,**
**dass** die Basisstation (1-3) Mittel enthält, um den zugeordneten Terminals (4-14) verschiedene Startzeitpunkte innerhalb eines Referenzrahmens zur Aussendung wenigstens einer Signalisierungssequenz für eine Kanalkapazitätsanforderung zuzuweisen.

2. Drahtloses Netzwerk nach Anspruch 1, **dadurch gekennzeichnet, dass** die Basisstation zur Sendung einer Bestätigung oder Abweisung einer Kanalkapazitätsanforderung für wenigstens ein Terminal über einen Zuweisungssteuerkanal vorgesehen ist.

3. Drahtloses Netzwerk nach Anspruch 2, **dadurch gekennzeichnet, dass** die Basisstation mit der Bestätigung für die Zuweisung von Kanalkapazität zur gleichzeitigen Übermittlung weiterer Informationen zur Übertragung der Nutzdaten über den gemeinsam genutzten Kanal vorgesehen ist.

4. Drahtloses Netzwerk nach Anspruch 1, **dadurch gekennzeichnet, dass** die Basisstation (1-3) nach Empfang einer weiteren bestimmten Signalisierungssequenz von einem Terminal (4-14) zur Überprüfung vorgesehen ist, ob das Terminal (4-14) in die Gruppe des von mehreren Terminals gemeinsam genutzten Kanals aufgenommen werden kann, und dass die Basisstation (1-3) bei einem positiven Prüfergebnis zur Sendung einer Mitteilung an das betreffende Terminal über die Benutzung des von mehreren Terminals gemeinsam genutzten Kanals vorgesehen ist.

5. Drahtloses Netzwerk nach Anspruch 1, **dadurch gekennzeichnet, dass** die Korrelationsvorrichtung zur Anpassung einer Breite eines Detektionsfensters in Abhängigkeit von Kanaleigenschaften des Kanals zwischen Basisstation (1-3) und Terminal (4-14) vorgesehen ist.

**Claims**

1. A wireless network comprising at least one base station (1 to 3) and a plurality of associated terminals (4 to 14) for exchanging user data and control data,

in which network the terminals (4 to 14) transmit a signaling sequence for requesting channel capacity, and the base station (1 to 3) has a correlation device (21, 22) for correlating a signal transmitted by one of the associated terminals, which signal contains the signaling sequence, the correlation device (21, 22) being used to detect a pulse developed from the signaling sequence and the base station containing a channel access control (23) which, after detection of the signaling sequence, is provided for rejecting or acknowledging the channel capacity request by the terminal (4 to 14) for a channel shared by a plurality of terminals, **characterized in that** the base station (1 to 3) comprises means for assigning various starting instants to the associated terminals (1 to 4) within a reference frame for transmitting at least one signaling sequence for a channel capacity request.

2. A wireless network as claimed in claim 1, **characterized in that** the base station is provided for transmitting an acknowledgement or rejection of a channel capacity request for at least one terminal via an assignment control channel.

3. A wireless network as claimed in claim 2, **characterized in that** together with the acknowledgement for assigning channel capacity, the base station is provided for simultaneously sending further information for transmitting the user data via the shared channel.

4. A wireless network as claimed in claim 1, **characterized in that** after the reception of a further, given signaling sequence from a terminal (4 to 14), the base station (1 to 3) is provided for checking whether the terminal (4 to 14) can be included in the group of terminals collectively sharing a channel, and **in that**, in the case of a positive outcome, the base station (1 to 3) is provided for sending a message to the relevant terminal about the use of the channel shared by a plurality of terminals.

5. A wireless network as claimed in claim 1, **characterized in that** the correlation device is arranged between base station (1 to 3) and terminal (4 to 14) for adapting a width of a detection window in dependence on channel properties of the channel.

**Revendications**

1. Réseau sans fil avec au moins une station de base (1-3) et plusieurs terminaux (4-14) affectés pour l'échange de données utiles et de données de commande, dans lequel les terminaux (4-14) transmettent une séquence de signalisation pour la demande de capacité de canal et la station de base (1-3) présente un dispositif de corrélation (21, 22) pour la corrélation d'un signal transmis par l'un des terminaux affectés qui contient la séquence de signalisation, le dispositif de corrélation (21, 22) étant utilisé pour la détection d'une impulsion provenant de la séquence de signalisation et la station de base contenant une commande d'accès au canal (23) qui est prévue après la détection de la séquence de signalisation pour le rejet ou la confirmation de la demande de capacité de canal du terminal (4-14) pour un canal commun utilisé par plusieurs terminaux, **caractérisé en ce que** la station de base (1-3) contient des moyens pour attribuer aux terminaux (4-14) affectés différents moments de départ au sein d'un cadre de référence pour la transmission d'au moins une séquence de signalisation pour une demande de capacité de canal.

2. Réseau sans fil selon la revendication 1, **caractérisé en ce que** la station de base est prévue pour la transmission d'une confirmation ou d'un rejet d'une demande de capacité de canal pour au moins un terminal par l'intermédiaire d'un canal de commande d'affectation.

3. Réseau sans fil selon la revendication 2, **caractérisé en ce qu'**avec la confirmation pour l'affectation de la capacité du canal, la station de base est prévue pour le transfert simultané d'autres informations en vue de la transmission des données utiles par l'intermédiaire du canal commun utilisé.

4. Réseau sans fil selon la revendication 1, **caractérisé en ce que** la station de base (1-3) est prévue après la réception d'une autre séquence de signalisation déterminée par un terminal (4-14) pour contrôler si le terminal (4-14) peut être enregistré dans le groupe du canal commun utilisé par plusieurs terminaux et que la station de base (1-3) est prévue, en cas de résultat positif du contrôle, pour la transmission d'une notification au terminal correspondant à propos de l'utilisation de canal commun utilisé par plusieurs terminaux.

5. Réseau sans fil selon la revendication 1, **caractérisé en ce que** le dispositif de corrélation est prévu pour l'adaptation d'une largeur d'une fenêtre de détection en fonction des propriétés du canal entre la station de base (1-3) et le terminal (4-14).

FIG. I

FIG. 2

FIG. 3

FIG. 4

FIG. 5

FIG. 6

FIG. 7

FIG. 8

FIG. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9818289 A

### In der Beschreibung aufgeführte Nicht-Patentliteratur

- **VON M.MOULY ; M.-B.PAUTET.** The GSM System for Mobile Communications. *Cell&Sys. Correspondences,* 1992

- **J.G. PROAKIS.** Digital Communications. Mc-Graw-Hill International Editions, 1995, 724-729